# EUROPÄISCHE PATENTSCHRIFT

(11) **EP 3 196 074 B1**
(45) Veröffentlichungstag und Bekanntmachung des Hinweises auf die Patenterteilung: **01.11.2023**
(21) Anmeldenummer: 17159384.1
(22) Anmeldetag: 10.12.2010
(51) Int. Cl.: B60Q 1/26, B60R 1/12, F21S 43/50

(54) **BELEUCHTUNGSMODUL FÜR EIN FAHRZEUG**
LIGHTING MODULE FOR A VEHICLE
MODULE D'ÉCLAIRAGE POUR VÉHICULE

(43) Veröffentlichungstag der Anmeldung: 26.07.2017
(62) Teilanmeldung aus: 10194436.1
(73) Patentinhaber: SMR Patents S.à.r.l., 2453 Luxembourg (LU)
(72) Erfinder: Herrmann, Andreas, 71364 Winnenden-Baach (DE); Fritz, Daniel, 70374 Stuttgart (DE); Goldschmidt, Soenke, verstorben (DE)
(74) Vertreter: Weber-Bruls, Dorothée

(56) Entgegenhaltungen:
- EP-A2- 1 176 361
- EP-A2- 1 690 736
- EP-A2- 1 772 667
- EP-A2- 2 228 258
- DE-A1- 10 243 373
- DE-A1- 10 350 266
- DE-A1-102005 038 154
- GB-A- 2 451 125
- JP-A- 2001 105 966
- US-A- 5 817 243

## Beschreibung

Es wird eine Beleuchtungseinheit für ein Fahrzeug vorgeschlagen, wobei ein Teil der Beleuchtung durch eine Verbindungsoptik ergänzt wird.

Es werden im besonderen Blinker im Außenspiegel betrachtet.

### Stand der Technik

Konventionelle Außenspiegel haben ein Design, das es erlaubt, den Spiegelkopf gegenüber dem Spiegelfuß von Hand oder motorisch in Fahrtrichtung des Fahrzeuges nach hinten abgeklappt werden kann. Zudem lässt sich der Spiegelglasträger im Spiegelkopf in der Regel vom Inneren des Fahrzeuges aus einstellen. Dadurch ist eine einwandfreie Sicht des Fahrers gewährleistet, wodurch eine hohe Verkehrssicherheit erreicht wird. Viele Außenspiegel weisen eine Blinkleuchte auf, die an der in Fahrtrichtung vorderen Seite des Spiegelgehäuses vorgesehen ist. Für neben oder hinter dem Außenspiegel befindliche Verkehrsteilnehmer ist die Blinkleuchte jedoch nicht oder nur ungenügend erkennbar. Daher werden Zusatz- LED s verwenden, die entgegen der Fahrtrichtung abstrahlen und am äußersten Rand des Außenspiegels im Blinker integriert sind, Nach den ECE Regeln soll ein Zusatzblinklicht im Außenspiegel einen Bereich beginnend bei 5° von der Fahrzeuglängsachse bis zu 60 ° zur Fahrzeuglängsachse in Fahrtgegenrichtung ausleuchten.

Aus dem Stand der Technik ist eine Vielzahl an Lösungen für Blinker im Außenspiegel bekannt. Dabei werden Blinkermodule in das Gehäuse eines Außenspiegels integriert. Diese Blinkermodule enthalten je nach Design Lichtwellenleiter, Reflektoren, Leiterplatten, Linsen und Abdeckscheiben und Leuchtmittel. Die Leuchtmittel sind durch die bekannten Vorteile immer mehr LEDs.

Eine Ausführungsform ist aus der EP 0858932 bekannt. In dieser Ausführungsform wird ein Blinkermodul gebildet, das einen Lichtleiter aufweist. Der Lichtleiter bildet mit dem Gehäuse eines Außenspiegels eine stetige Kontur aus. Das Licht einer LED wird an einem Ende des Lichtleiters eingekoppelt und über die gesamte Länge transportiert. Die Abstrahlung des Lichtes erfolgt über die gesamte Länge des Lichtleiters je nach Dichte der Auskoppelvorrichtungen und am Ende des Lichtleiters. Es erweist sich, dass diese Lösung für die optimale Ausleuchtung einer Beleuchtungseinrichtung nicht ausreicht. Man erreicht mit der Lösung der fernen Einkopplung von Licht und dem Transport von 5 bis 20 cm nicht die gewünscht Lichtstärke.

Aus der US 7357549 ist einen Beleuchtungseinheit bekannt, die Lichtleiterelemente aufweist, in die mindestens einen LED ragt. In dieser Ausführung wird er Lichtleiter in mehrere Abschnitte unterteilt und weist ein Aussparung entlang seiner Längenausdehnung auf. Durch die Ausnehmung im Lichtleiter, wird dieser in seiner Stabilität geschwächt und/oder die äußere stetige Oberfläche des Lichtleiters durch eine Erhebung gestört. Dadurch dass das Lichtleitmaterial optisch klar ist, ist der Lichteinkoppelpunkt von außen sichtbar, was den harmonischen Eindruck des Lichtleiters stört.

Die EP 2 228 258 A2 offenbart die Einbettung von Leuchtdioden in Bauteile eines Kraftfahrzeugs. Bei einer Ausführungsform wird ein Rücklicht bereitgestellt, indem zwei gegenüberliegende Leuchtdioden Licht in aufeinander zu verlaufende Lichtleiter einkoppeln, wobei die Lichtleiter durch eine Lichtbarriere voneinander getrennt sind. Das Licht tritt seitlich aus den Lichtleitern aus, wobei eine Deckschicht einen Aufdruck zur Bereitstellung einer Information tragen kann.

Aus der GB 2 451 125 A ist ein Beleuchtungsmodul für ein Fahrzeug bekannt, wobei das Beleuchtungsmodul ein Gehäuse und mindestens zwei Lichtleiterabschnitte sowie mindestens zwei LEDs aufweist, die im Gehäuse angeordnet sind, wobei das Licht der mindestens zwei LEDs in die mindestens zwei Lichtleiterabschnitte eingekoppelt wird. Zwischen den Lichtleiterabschnitten ist ein von den Lichtleiterabschnitten verschiedenes Anschlussstück, das an die Außenkontur der Lichtleiterabschnitte angepasst und in ihrem Inneren eine Informationsoptik aufweist, vorgesehen.

Es ist Aufgabe der Erfindung ein Beleuchtungsmodul zu schaffen, in dem das Licht in mindestens zwei Lichtleiterabschnitte eingespeist und der Kontaktbereich der Lichtleiter nach außen mit einer Optik verschlossen ist, die einerseits die Einkoppelstelle abdeckt und auf der anderen Seite eine zusätzlichen Mehrwert durch einen dekorativen Eindruck schafft.

### Beschreibung der Erfindung

Die nachfolgenden Figuren und die Beschreibung zeigen verschiedene Ausführungsformen.
Fig. 1 zeigt eine erste Ausführungsform eines Beleuchtungsmoduls.
Fig. 2 zeigt eine zweite Ausführungsform eines Beleuchtungsmoduls.
Fig. 3 bis 5 zeigen Beispiele der Logobeleuchtung, wobei Fig. 3 eine erfindungsgemäße Ausgestaltung wiedergibt.
Fig. 6 zeigt eine Befestigungsmöglichkeit.
Fig. 7 zeigt eine Entkopplung in der Verbindungsoptik.

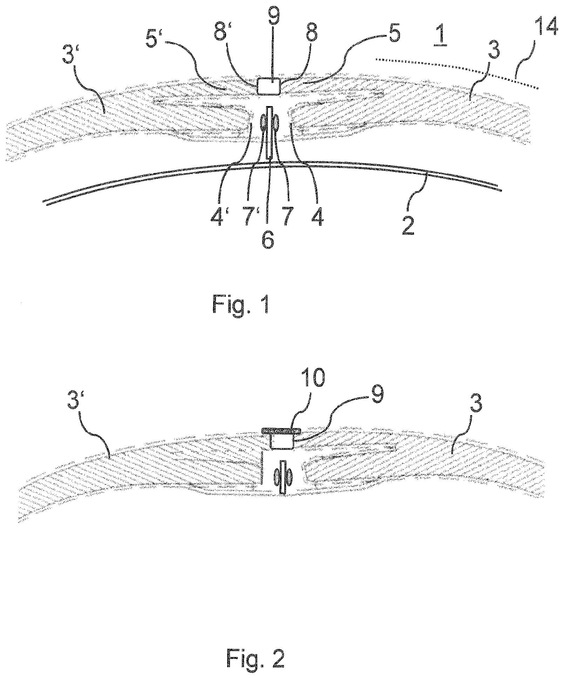

Figur 1 zeigt eine Ausführungsform eines Beleuchtungsmoduls, das nicht vollständig dargestellt ist. Das Beleuchtungsmodul 1 besteht aus Lichtleitern 3, 3' sowie einem Gehäuse 2, dessen Rückwand in der Zeichnung dargestellt ist. Die Lichtleiter bilden in einer Ausführungsform die äußere Kontur 16 des Beleuchtungsmoduls oder liegen in einer anderen Ausführungsform - wie hier skizziert- hinter einer Lichtscheibe 14. Sie folgen dabei ebenfalls der Kontur der Lichtscheibe 14. Die Lichtleiter 3 und 3' weisen in der gewählten Ausführungsform zwei Arme auf. Der eine innere Arm des Lichtleiters endet in einer Einkoppelstelle 4 beziehungsweise 4'. Der äußere Arm 5, 5' der Lichtleiter endet stumpf an einer Verbindungsoptik 9. Die Verbindungsoptik 9 sitzt genau zwischen den beiden Endfacetten 8, 8' der beiden Lichtleiter 3 und 3'.

Die beiden Arme des Lichtleiters sind in dieser Ausführungsform nicht gleich lang ausgebildet. Vielmehr bilden die inneren Arme mit den Einkoppelstellen 4, 4' einen Raum, in den eine Platine 6, die mit LEDs 7, 7' bestückt ist, hineinragt. Die Verbindungsoptik ist in dieser Ausführungsform ein Quader, der genau in die Ausnehmung der äußeren Arme 5, 5' der Lichtleiter passt. Dieser Quader der Verbindungsoptik deckt die Einkoppelstelle, den Einkoppelraum unterhalb der Verbindungsoptik ab. Um den Einblick auf die Einkoppelstelle und die Platine zu verdecken ist die Verbindungsoptik 9 dabei als opakes Material ausgebildet. Das Licht der LEDs 7 und 7' wird Einkoppelstellen 4, 4' in die Lichtleiter 3, 3' eingekoppelt und zu den jeweiligen Auskoppelpunkten transportiert. Dabei wird Licht über die äußere Kontur 16 der Lichtwellenleiter abgestrahlt, sowie über die Auskoppelstellen, die in diesen Zeichnungen nicht dargestellt sind.

Fig. 2 zeigt eine weitere Ausführungsform der Verbindungsoptik. Auf der linken Seite des Beleuchtungsmoduls wird ein Lichtwellenleiter 3' dargestellt, der nicht aus zwei Armen besteht. Der Lichtleiter weist eine komplette Struktur auf.

Die Verbindungsoptik 9 wird eine Informationsoptik 10 ergänzt. Die Informationsoptik 10 besteht dabei beispielsweise aus einem farbigen Material, das die Verbindungsoptik entweder vollständig abdeckt oder aus einem farbigen Material, das die Verbindungsoptik nur mit einem Logo oder einem Zeichen abdeckt. Die Informationsoptik 10 kann auch aus einer opaken Scheibe bestehen. Auch in diesem Ausführungsbeispiel wird das Licht der beiden beispielshaft eingezeichneten LEDs 7 und 7' in Richtung der Lichtwellenleiter abgestrahlt. Es ist aber auch möglich, eine weitere LED vorzusehen, deren Licht durch die Verbindungsoptik strahlt. Besonders bei der Darstellung eines Logos ist eine solche Ausführungsform von Vorteil.

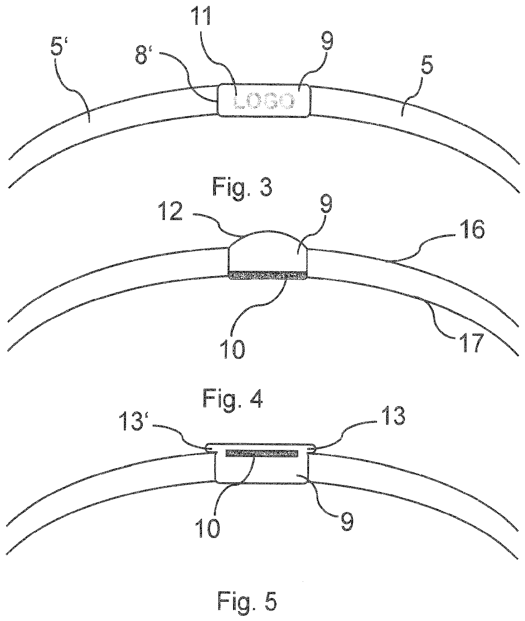

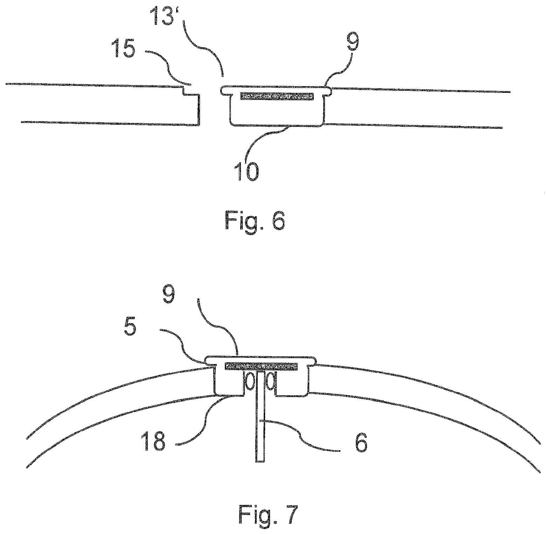

Wie in den Figuren 4 und 5 dargestellt muss die Informationsoptik 10 nicht zwingend auf der äußeren Kontur 6 des Lichtleiters angebracht sein. Die Informationsoptik 10 ist in der Ausführungsform der Figur 4 auf der Seite der inneren Kontur des Lichtwellenleiters vorgesehen. In der Ausführungsform nach Figur 4 weist die Verbindungsoptik zudem eine konvexe Oberfläche an ihrer Außenseite auf. Dadurch wird eine Linsenstruktur gebildet, die eine saubere Abbildung des Logos, das sich in der Informationsoptik 10 befindet, ermöglicht. Die Ausleuchtung des Logos, das sich in der Informationsoptik 10 befindet erfolgt dabei direkt über die Lichtwellenleiter 5, 5'. Das Zeichen oder Logo der Informationsoptik muss nicht zwingend von hinten durchstrahlt werden. In der Ausführungsform der Figur 5 ist die Informationsoptik in die Verbindungsoptik eingebettet. Für alle Ausführungsformen ist es möglich, die Außenseite jeweils als konvexe Linse auszubilden. Die Ausführungsform nach Figur 5 zeigt noch eine weitere spezielle Ausbildung. Die Verbindungsoptik 9 weist an ihrer Außenseite überkragende Ränder 13, 13' auf. Diese Ränder überkragen die Lichtleiter 5,5'. Die überkragenden Ränder 13 und 13' dienen dabei zu Befestigung der Verbindungsoptik 9 an den Lichtleitern 5, 5'. Es ist, wie in Figur 6 dargestellt, auch möglich die überkragenden Ränder direkt in die Aufnahmen 15 des Lichtwellenleiters einzubringen und so eine bündige Oberfläche herzustellen.

Die Befestigungsmittel umfassen dabei alle Mittel, die zum Kleben, zum Ultraschallschweißen, Reibschweißen sowie anderen Formen des Heißverbindens eingesetzt werden. Die Befestigungsmittel sind dabei auch als Flächen zu verstehen, die für das Verkleben geeignet sind.

Eine erfindungsgemäße Ausführungsform ist in Figur 3 dargestellt. In dieser Ausführungsform wird in die Verbindungsoptik 9 ein Zeichen 11 eingeschrieben. Dabei wird ein spezieller Kunststoff verwendet, so dass ein Zeichen über einen Laser eingeschrieben werden kann. Kunststoffe absorbieren im Bereich des nahen ultravioletten bis nahen infraroten Lichtes keine Laserstrahlung. Eine Umsetzung der Laserenergie in Wärme ist deshalb nur möglich, wenn das Polymer, erfindungsgemäß, durch Zusatz eines Additivs entsprechend "lasersensibilisiert" wurde. Ohne Laseradditiv können Kunststoffe deshalb nur im fernen ultravioletten Licht, z.B. mit Excimer-Lasern und im fernen infraroten Licht, z.B. mit CO2-Lasern bearbeitet werden.

In handelsübliches Acrylglas können zwar 3D-Motive wie Logos laserinnengraviert werden, jedoch sind Auflösung und Brillanz deutlich schlechter als in Silikatglas. Die geringe Qualität der Innengravur hat den Einsatz von Acrylglas zum Laserinnengravieren bisher verhindert. Durch Einsatz von Spezialkunststoffen bzw. Additiven ist es gelungen, 3D-Motive mit hoher Qualität laserinnengraviert herzustellen. Dies wird beispielsweise durch Nanomodifizierung der hochtransparenten Kunststoffe erreicht. Die für die Nanomodifizierung erforderliche Verteilung ist die Grundvoraussetzung, um die hohe Transparenz des Kunststoffs zu erhalten und um ein Bild mit hoher Auflösung und Brillanz zu erzeugen.

In nanomodifiziertem Acrylglas wird eine sehr hohe Auflösung erzielt. Während bei der Laserinnengravur in nicht modifiziertem Acrylglas optisch und mechanisch störende Mikrorisse entstehen, werden in dem nanomodifiziertem Acrylglas hingegen definierte "Punkte" erzeugt. Die Möglichkeit, hoch auflösende 3D-Motive in Bauteile zu gravieren, besteht nicht nur bei Acrylglas, sondern kann auch bei anderen hochtransparenten Werkstoffen wie in teilkristallinem Polyamid genutzt werden. Das Objekt aus der CAD-Datei muss in eine sogenannte Punktwolke (dot cloud) umgewandelt werden. Jeder Punkt wird dabei mit seinen x-, y- und z-Richtungskoordinaten berechnet und gespeichert. Der 3D-Laser kann, im Gegensatz zum normalen Schreiblaser, nur einzelne Punkte, aber mit einer sehr hohen Geschwindigkeit einschreiben.

Jeder einzelne Punkt wird dann über einen hochfokussierten, frequenzverdoppelten Nd:YAG-Laser (532 nm) in das transparente Polymer eingraviert. Beim PMMA werden in diesem Prozess winzigste Bläschen erzeugt, während es beim PA zu einer Karbonisierung (Schwärzung) des Kunststoffes kommt.

Der Laserstrahl wird von zwei computergesteuerten Galvanometerspiegeln in x-, y-, und z-Richtung abgelenkt und mit einer (vorzugsweise Planfeld-) Linse auf das zu beschriftende Teil fokussiert.

In all den Ausführungsformen nach Figur 3 - 6 wird das Licht der LEDs direkt in den Lichtwellenleiter 5, 5' eingekoppelt.

In Figur 7 findet sich eine Ausführungsform, in der das Licht direkt in die Verbindungsoptik eingekoppelt wird. Die Verbindungsoptik 9 weist dafür eine Ausnehmung 18 auf, in die die Platine 6 mit den darauf montierten LEDs hineinragt. Um die Verbindungsoptik zwischen den Lichtleiterabschnitten zusammen zu bauen, sind Mittel zur Verbindung vorgesehen. Dabei kommen verschiedene Verbindungsmöglichkeiten zum Einsatz. Eine einfache Verbindung erfolgt über das Verkleben der Verbindungsoptik mit den Lichtleitern. Möchte man allerdings Licht aus den Lichtwellenleitern in die Verbindungsoptik einkoppeln, müssen die Klebestellen der Endfacetten der Lichtleiter zu der Verbindungsoptik optisch transparent sein. Es ist auch möglich, die Verbindungsoptik 9 zwischen die Lichtleiterabschnitte einzupressen oder sie über Reibschweissen mit den Lichtleitern zu verbinden. Jede Art von Clipsverbindung ist ebenfalls denkbar. Dabei kann die Verbindungsoptik von der Außenseiten der Außenkontur 16 zwischen die Lichtleiter geschoben und dort verklipst werden. Mit der Ausführungsform von Figur 7 ist noch ein weiterer Vorteil verbunden. Die Verbindungsoptik 9 wird dabei mit der Platine 6, den LEDs 7 und der Informationsoptik 10 zu einem gemeinsamen selbstständigen Modul integriert. Dadurch können Lichtleiterabschnitte miteinander verbunden werden, in dem man die Verbindungsoptik von außen zwischen die Öffnung der Lichtleiter einsteckt. Die Kontaktierung der Platine erfolgt dabei über Stecker oder Drahtverbindungen an der Rückseite des Beleuchtungsgehäuses.

Die gezeigten Ausführungsformen kommen vorzugsweise als Blinkermodul in einem Außenspiegel eines Fahrzeugs zum Einsatz. Die Beleuchtungseinheit kann aber auch an anderen Stellen des Fahrzeugs eingesetzt werden.

### Bezugszeichenliste

- 1 :: Beleuchtungsmodul
- 2 :: Gehäuserückwand
- 3 :: Lichtleiter
- 4 :: Einkoppelstelle
- 5 :: Lichtleiterarm
- 6 :: Platine
- 7:: LED
- 8 :: Endfacette Lichtleiter
- 9 :: Verbindungsoptik
- 10 :: Informationsoptik
- 11: eingeschriebenes Zeichen
- 12 :: Linse
- 13 :: überkragender Rand
- 14 :: Lichtscheibe
- 15 :: Aufnahme
- 16 :: Außenkontur
- 17 :: Innenkontur
- 18 :: Ausnehmung in der Verbindungsoptik

## Patentansprüche

1. Beleuchtungsmodul (1) für ein Fahrzeug, bestehend aus
einem Gehäuse,
mindestens zwei Lichtleiterabschnitten, die im Gehäuse angeordnet sind und sich entlang der Außenkontur (16) des Beleuchtungsmoduls (1) erstrecken,
mindestens zwei LEDs (7, 7'), die auf mindestens einer Platine im Gehäuse angeordnet sind, wobei das Licht der mindestens zwei LEDs (7, 7') in die mindestens zwei Lichtleiterabschnitte eingekoppelt wird, und
zwischen den Lichtleiterabschnitten einer von den Lichtleiterabschnitten verschiedenen Verbindungsoptik (9), die Kontaktbereiche zu den mindestens zwei Lichtleiterabschnitten aufweist, wobei die Verbindungsoptik (9) den Kontaktbereich der mindestens zwei Lichtleiterabschnitte nach außen verschließt, wobei das Licht der mindestens zwei LED's (7, 7') an Einkoppelstellen (4, 4') in die mindestens zwei Lichtleiterabschnitte einkoppelbar ist, wobei die Verbindungsoptik (9) der Außenkontur der Lichtleiterabschnitte angepasst ist und eine Informationsoptik (10) aufweist,
wobei die Einkoppelstellen (4, 4') durch die Verbindungsoptik (9) abgedeckt sind, **dadurch gekennzeichnet, dass**
die Verbindungsoptik (9) eine im Inneren eingelaserte Information enthält, wobei die Verbindungsoptik (9) ein Kunststoffmaterial aufweist, das ein Polymer umfasst, das durch Zusatz eines Additivs im Bereich des nahen ultravioletten bis nahen infraroten Lichtes lasersensibilisiert ist.

2. Beleuchtungsmodul (1) nach Anspruch 1, **dadurch gekennzeichnet, dass**
die Lichtleiterabschnitte die äußere Abdeckung des Gehäuses des Beleuchtungskörpers (1) bilden oder
die Lichtleiterabschnitte innerhalb einer weiteren äußeren Abdeckung des Gehäuses des Beleuchtungskörpers (1) liegen.

3. Beleuchtungsmodul (1) nach Anspruch 1, **dadurch gekennzeichnet, dass** die Lichtleiterabschnitte stumpf an der Verbindungsoptik (9) enden.

4. Beleuchtungsmodul (1) nach Anspruch 1, **dadurch gekennzeichnet, dass** zwei Lichtleiter (3, 3') vorgesehen sind, die zur Bereitstellung der Lichtleiterabschnitte jeweils einen Lichtleiterarm (5, 5') umfassen.

5. Beleuchtungsmodul (1) nach Anspruch 4, **dadurch gekennzeichnet, dass** das Licht der LEDs (7, 7') direkt in die Lichtleiterabschnitte einkoppelbar ist.

6. Beleuchtungsmodul (1) nach einem der vorhergehenden Ansprüche, **gekennzeichnet durch**
Nanomodifizierung des hochtransparenten Kunststoffs, insbesondere zur Nutzung von nanomodifiziertem Acrylglas oder teilkristallinem Polyamid.

7. Blinkermodul für einen Außenspiegel mit einem Beleuchtungsmodul (1) nach einem der vorangehenden Ansprüche.

8. Außenspiegel, in dessen Gehäuse ein Blinkermodul nach Anspruch 7 integriert ist.

## Claims

1. A lighting module (1) for a vehicle, consisting of
a housing,
at least two light guide portions arranged in the housing and extending along the outer contour (16) of the lighting module (1),
at least two LEDs (7, 7') arranged on at least one printed circuit board in the housing, wherein the light of the at least two LEDs (7, 7') is coupled into the at least two light guide portions, and
between the light guide portions, connection optics (9) other than the light guide portions, which has contact regions to the at least two light guide portions, wherein the optical connection element (9) seals off the contact region of the at least two light guide portions towards the outside, wherein the light of the at least two LEDs (7, 7') is able to be coupled into the at least two light guide portions at coupling-in points (4, 4'), wherein the connection optics (9) is adapted to the outer contour of the light guide portions and includes an information optics (10),
wherein the coupling-in points (4, 4') are covered by the connection optic (9), **characterized in that** the connection optics (9) contains a piece of information laser-etched into the inside thereof,
wherein the connection optics (9) includes a plastics material comprising a polymer which is laser-sensitized in the range of near ultraviolet to near infrared light by the addition of an additive.

2. The lighting module (1) according to Claim 1, **characterized in that**
the light guide portions form the outer cover of the housing of the lighting body (1), or
the light guide portions are located inside a further outer cover of the housing of the lighting body (1).

3. The lighting module (1) according to Claim 1, **characterized in that** the ends of the light guide portions terminate bluntly at the connection optics (9).

4. The lighting module (1) according to Claim 1, **characterized in that** two light guides (3, 3') are provided, which each comprise a light guide arm (5, 5') for providing the light guide portions.

5. The lighting module (1) according to Claim 4, **characterized in that** the light of the LEDs (7, 7') is able to be directly coupled into the light guide portions.

6. The lighting module (1) according to any one of the preceding claims, **characterized by** nanomodification of the highly transparent plastics material, in particular for use of nanomodified acrylic glass or semi-crystalline polyamide.

7. A turn signal module for an outer mirror including a lighting module (1) according to any one of the preceding claims.

8. An outer mirror into the housing of which a turn signal module according to Claim 7 is integrated.

## Revendications

1. Module d'éclairage (1) pour un véhicule, constitué par
un boîtier,
au moins deux sections de guide de lumière, qui sont agencées dans le boîtier et s'étendent le long du contour extérieur (16) du module d'éclairage (1),
au moins deux DEL (7, 7'), qui sont agencées sur au moins une platine dans le boîtier, la lumière des au moins deux DEL (7, 7') étant couplée dans les au moins deux sections de guide de lumière, et
entre les sections de guide de lumière, une optique de liaison (9) différente des sections de guide de lumière, qui présente des zones de contact avec les au moins deux sections de guide de lumière, l'optique de liaison (9) fermant vers l'extérieur la zone de contact des au moins deux sections de guide de lumière, la lumière des au moins deux DEL (7, 7') pouvant être couplée dans les au moins deux sections de guide de lumière en des points de couplage (4, 4'), l'optique de liaison (9) étant adaptée au contour extérieur des sections de guide de lumière et présentant une optique d'information (10),
les points de couplage (4, 4') étant recouverts par l'optique de liaison (9), **caractérisé en ce que** l'optique de liaison (9) contient une information gravée au laser à l'intérieur,
l'optique de liaison (9) présentant un matériau plastique qui comprend un polymère sensibilisé au laser dans la plage de la lumière du proche ultraviolet au proche infrarouge par ajout d'un additif.

2. Module d'éclairage (1) selon la revendication 1, **caractérisé en ce que**
les sections de guide de lumière forment le couvercle extérieur du boîtier du corps d'éclairage (1), ou
les sections de guide de lumière sont situées à l'intérieur d'un autre couvercle extérieur du boîtier du corps d'éclairage (1).

3. Module d'éclairage (1) selon la revendication 1, **caractérisé en ce que** les sections de guide de lumière se terminent bout à bout au niveau de l'optique de liaison (9).

4. Module d'éclairage (1) selon la revendication 1, **caractérisé en ce que** deux guides de lumière (3, 3') sont prévus, qui comprennent chacun un bras de guide de lumière (5, 5') pour fournir les sections de guide de lumière.

5. Module d'éclairage (1) selon la revendication 4, **caractérisé en ce que** la lumière des DEL (7, 7') peut être couplée directement dans les sections de guide de lumière.

6. Module d'éclairage (1) selon l'une quelconque des revendications précédentes, **caractérisé par** la nanomodification du plastique hautement transparent, en particulier pour utiliser du verre acrylique nanomodifié ou du polyamide semi-cristallin.

7. Module clignotant pour un rétroviseur extérieur avec un module d'éclairage (1) selon l'une quelconque des revendications précédentes.

8. Rétroviseur extérieur, dont le boîtier intègre un module clignotant selon la revendication 7.
